# EUROPEAN PATENT SPECIFICATION

(11) **EP 3 409 578 B1**
(45) Date of publication and mention of the grant of the patent: **30.12.2020**
(21) Application number: 18165160.5
(22) Date of filing: 29.03.2018
(51) Int. Cl.: B64C 3/18, B64C 1/40, B64C 9/00, B32B 5/24, B32B 5/18, B32B 7/08, B64C 1/00, B32B 27/06, B64D 13/00, B64C 3/26, B64C 13/50, B64G 1/50

(54) **A THERMAL MANAGEMENT SYSTEM, A COMPOSITE WING, AND A COMPOSITE WING SPAR**
THERMISCHES MANAGEMENTSYSTEM, FLÜGEL UND FLÜGELHOLM AUS VERBUNDWERKSTOFF
SYSTÈME DE GESTION THERMIQUE, AILE COMPOSITE ET LONGERON D'AILE COMPOSITE

(30) Priority: 30.05.2017 US 201715607962
(43) Date of publication of application: 05.12.2018
(60) Divisional application: 20197832.7
(73) Proprietor: The Boeing Company, Chicago, IL 60606-1596 (US)
(72) Inventor: White, Edward V., Chicago, 60606-1596 (US)
(74) Representative: Witte, Weller & Partner Patentanwälte mbB

(56) References cited:
- EP-A1- 2 409 914
- WO-A1-2016/088470
- FR-A1- 2 937 304
- US-A1- 2008 277 526
- US-A1- 2009 288 814
- US-A1- 2010 321 891
- US-A1- 2013 187 004

## Description

### FIELD OF THE DISCLOSURE

This disclosure relates generally to thermal management systems for thin wing or composite material wing aircraft. More particularly, this disclosure relates to systems for structurally integrating thermal management for advanced control surface actuators into thin and/or composite wing aircraft.

### BACKGROUND

The recent trend in aircraft manufacturing is to use more composite material (i.e., carbon fiber reinforced polymer (CFRP)) and less metallic material to reduce the weight of the aircraft. However, composite material is not as good at conducting heat as metals. More specifically, the fibers in the composite material have relatively high thermal conductivity (e.g., carbon). However, the resin surrounding the fibers is not as thermally-conductive (e.g., a polymer), which lowers the overall thermal-conductivity of the composite material.

Another trend in aircraft manufacturing is the push for implementing More Electric Aircraft ("MEA") with more electrically powered subsystems, Electric Actuation Systems ("EAS"), and fewer pneumatic and hydraulic systems. EAS, such as control surface actuators in the wing, generate heat as they are operated. In contrast, for hydraulic actuators, generated heat is transferred to the hydraulic fluid, which is channeled to a heat exchanger to manage the heat generated in the wing. EAS have no such fluid, hydraulic or otherwise, to transfer heat away from the actuator. Accordingly, compared to metal wings that do efficiently transfer heat, within a composite wing, heat can build up and the composite material does not efficiently transfer the heat to a cooler location (i.e., ambient atmosphere and/or a wing fuel tank). The buildup of heat can damage the EAS, surrounding structures, or the like.

Some EAS have active cooling systems that include coolant conduits and heat exchangers. However, such active cooling systems use power and add weight to the aircraft.

Document US 2010/0321891 A1 is titled "AVIONICS CHASSIS". Document US 2013/0187004 A1 is titled "FIRE PROTECTION DEVICE FOR AIRCRAFT". Further, document EP 2 409 914 A1 is titled "Aircraft thermal insulation".

### SUMMARY

A thermal management system for transferring heat from a heat load is defined in claim 1.

Disclosed embodiments include a thermal management system for transferring heat from a heat load including a composite structural member that supports a heat load source and a heat transfer member in thermal contact with the composite structural member, and in thermal contact with a heat sink. The system further includes at least one thermally-conductive first fastener, in thermal contact with the heat transfer member, that couples the heat load source to the composite structural member, and conducts heat from the heat load source into the heat transfer member, and the heat transfer member conducts heat from the thermally-conductive first fastener to the heat sink.

The heat sink comprises ambient atmosphere and the system further includes a thermally-conductive second fastener, in thermal contact with the heat transfer member, and coupling a composite wing skin to the composite structural member, and the wing skin has at least one side exposed to the ambient atmosphere, and at least a portion of the thermally-conductive second fastener extends to the at least one side exposed to the ambient atmosphere.

The heat transfer member may be carbon foam material. In addition, the composite structural member has a first thermal conductivity coefficient, the heat transfer member has a second thermal conductivity coefficient that is higher than the first thermal conductivity coefficient, and the at least one thermally-conductive first fastener has a third thermal conductivity coefficient that is higher than the second thermal conductivity coefficient.

The heat load source may be an EAS. The composite wing skin may be fibers in a resin and the fibers are more thermally-conductive than the resin.

Disclosed embodiments also include a structurally integrated thermal management system for a composite aircraft wing, the system including a first composite wing skin, in thermal contact on an interior side with a heat transfer member, and exposed to ambient atmosphere on an exterior side, a composite wing spar having an interior cavity that contains a portion of the heat transfer member, a second composite wing skin, in thermal contact on an interior side with the heat transfer member, and exposed to ambient atmosphere on an exterior side, an EAS coupled to the composite wing spar by a thermally-conductive mount and at least one thermally-conductive first fastener that extends into the interior cavity and is in thermal contact with the heat transfer member, one or more thermally-conductive second fasteners that couple the first composite wing skin and the second composite wing skin to the composite wing spar, and thermally contact the heat transfer member, and a portion of the one or more thermally-conductive second fasteners extend through to the exterior side of the first composite wing skin, or the second composite wing skin.

The system may also include a stiffening member in contact with the composite wing spar and the interior side of the first composite wing skin, or the second composite wing skin. The stiffening member is configured to define one or more channels. The one or more channels contain a portion of the heat transfer member. The at least one thermally-conductive first fastener, or the at least one thermally-conductive second fastener may be formed of stainless steel.

The first composite wing skin, or the second composite wing skin, may be fibers in a resin. In some embodiments, the fibers may be glass or carbon.

Disclosed embodiments also include a composite wing spar including a first composite structural member having a base, a cap, and a web portion, a second composite structural member having a base, a cap, and a web portion, the web portion of the first composite structural member is positioned adjacent, and spaced apart from, the web portion of the second composite structural member to define a central cavity between the first composite structural member and the second composite structural member, and a
thermally-conductive material positioned in at least a portion of the central cavity and extending to cover at least a portion of the base and the cap of the first composite structural member, and at least a portion of the base and cap of the second composite structural member.

### BRIEF DESCRIPTION OF THE DRAWINGS

FIG. 1 is a cross-sectional schematic of a portion of structurally integrated thermal management system in accordance with disclosed embodiments.
FIG. 2 is a side-view, cross-sectional schematic along line 2-2 of FIG. 1.
FIG. 3 is a top-view, cross-sectional schematic along line 3-3 of FIG. 1.

While the disclosure is susceptible to various modifications and alternative forms, specific embodiments have been shown by way of example in the drawings and will be described in detail herein. However, it should be understood that the disclosure is not intended to be limited to the particular forms disclosed. Rather, the intention is to cover all modifications and alternatives falling within the scope of the invention, as defined by the appended claims.

### DETAILED DESCRIPTION

The embodiments described herein provide an improved, lightweight system to manage heat loads caused by EAS and other electrical systems in composite aircraft components. The disclosed system recovers, and potentially improves upon, the heat conduction of metal structures while retaining the weight savings of composite structures. This is accomplished by the intimate integration of heat conduction paths into composite structures. More specifically, there is disclosed a composite stiffener assembly for an aircraft component (e.g., a spar assembly for a wing) that includes an inner, thermally-conductive material that can transfer heat from a heat load (e.g., an EAS) to a heat sink which includes ambient atmosphere, a wing tank, some other internal or external tank, a phase change material, some other location, or combinations of the foregoing. The thermally-conductive material has a higher heat conductivity than the surrounding composite material to create a thermal path to, at least, the aircraft skin. The thermal path enables heat to transfer from the heat load, through the thermally-conductive material to the wing skin, and from the exterior surface of the skin to the ambient atmosphere (which can be quite cold at altitude).

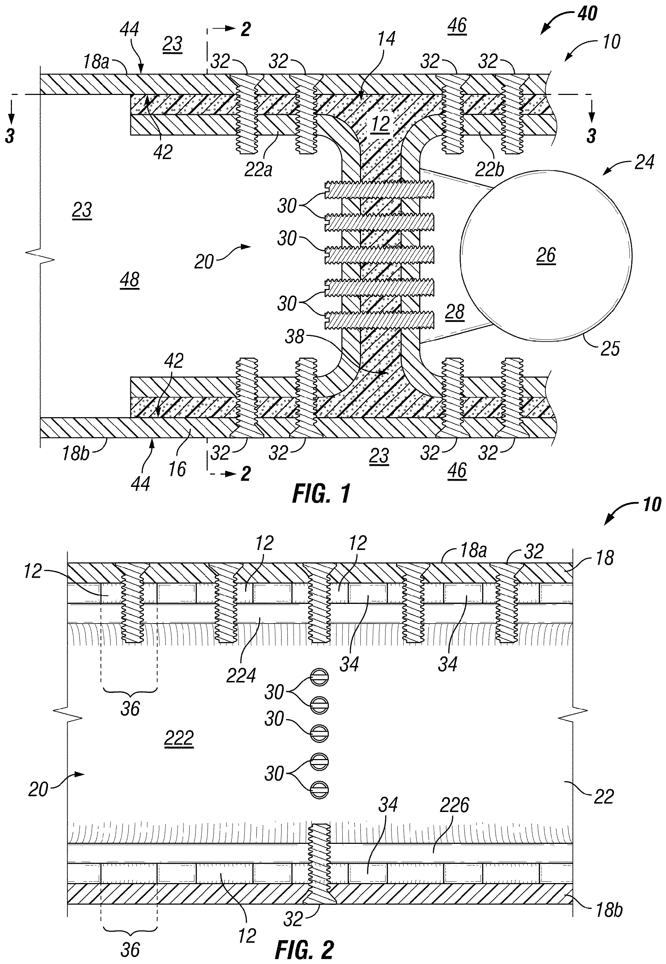

FIG. 1 is a front-view, cross-sectional schematic of a portion of structurally integrated thermal management system 10 in accordance with disclosed embodiments. As shown, system 10 includes a structural member 22, a heat transfer member 12, and at least one first fastener 30. The structural member 22 includes and/or is formed from a composite material. The heat transfer member 12 is in thermal contact with the structural member 22 and a heat sink 23. The first fastener(s) 30 includes and/or is formed from a thermally-conductive material. The first fastener(s) 30 is in thermal contact with the heat transfer member 12 and couples a heat load source 24 to the composite structural member 22. The first fastener(s) 30 conducts heat from the heat load source 24 into the heat transfer member 12, and the heat transfer member 12 conducts heat from the first fastener(s) 30 to a heat sink 23. The system 10 and its components are described in more detail herein.

The heat transfer member 12 is formed from the thermally-conductive material 14. The thermally-conductive material 14 is preferably a solid, although it need not be, that is not reactive with the composite material 16 (e.g., absent a galvanic barrier, aluminum and carbon fiber react with each other and are, thus, a less desirable combination). The heat transfer member 12 can be formed from a carbon foam, or other material. For example, heat transfer member 12 is formed of thermally-conductive materials such as metals, non-metals, pyrolytic graphite strips or straps, copper strips or straps, silver strips or straps, graphene, carbon nano tube straps or strips, or the like. Other materials for the heat transfer member 12 are a metallic foam, a microlattice, or the like. Embodiments employing a microlattice may also utilize a cooling fluid flowing through or around the microlattice to improve heat transfer performance.

The carbon foam used in or as heat transfer member 12 can be "graphitic" or "non-graphitic" and have higher thermal and electrical conductivity with a lower density than, for example, a metal. In one example where heat transfer member 12 is or includes a graphitic foam, the effective thermal conductivity of the graphitic foam is more than 150 W/(m-K), which is higher than the value of 2-26 W/(m-K) for aluminum. Likewise, the density of the graphitic foam in this example is 0.2 - 0.6 g/cm³, which is approximately one-fifth the density of aluminum. Thus, where weight is a consideration, as it is in aircraft, the low density and high thermal conductivity of carbon foam is advantageous for use as or in heat transfer member 12.

As described above, the system 10 includes one or more structural members 22 that are formed from a composite material, such as CFRP. A wing spar 20 includes at least a structural member 22a, a second structural member 22b, and a thermally-conductive material 14. Each structural member 22a, 22b includes a web portion 222, a cap 224, and a base 226 (see, e.g., FIG. 2). The web portion 222 of the first structural member 22a is positioned adjacent to, and spaced apart from, the web portion 222 of the second structural member 22b to define a central cavity 38 between the first structural member 22a and the second structural member 22b. The thermally-conductive material 14 (e.g., the heat transfer member 12) is positioned in at least a portion of the central cavity 38. The thermally-conductive material 14 extends to cover at least a portion of the base 226 and the cap 224 of the first structural member 22a and to cover at least a portion of the base 226 and the cap 224 of the second structural member 22b.

A composite wing 40 for an aircraft includes a first composite wing skin 18a, the wing spar 20, a second composite wing skin 18b, an electric actuation system (EAS) 25, and one or more thermally-conductive second fasteners 32. The first wing skin 18a is in thermal contact on an interior side 42 with the heat transfer member 12 and is exposed to ambient atmosphere 46 on an exterior side 44. The wing spar 20 has the interior cavity 38 that contains a portion of the heat transfer member 12. The second wing skin 18b is in thermal contact on an interior side 42 with the heat transfer member 12 and is exposed to ambient atmosphere 46 on an exterior side 44. The EAS 25 is coupled to the wing spar 20 by a thermally-conductive mount 28 and at least one thermally-conductive first fastener 30 that extends into the interior cavity 38 of the spar 20. The EAS 25 is in thermal contact with the heat transfer member 12. The one or more thermally-conductive second fasteners 32 couple the first wing skin 18a and the second wing skin 18b to the composite wing spar 20 and thermally contact the heat transfer member 12. A portion of the one or more thermally-conductive second fasteners 32 extend through to the exterior side 44 of the first wing skin 18a or the second wing skin 18b.

For embodiments where system 10 is incorporated into a wing spar 20, as shown in FIG. 1, heat transfer member 12 extends throughout the wing spar 20 and is in thermal contact with the interior side 42 of wing skin 18. As also shown, the one or more structural members 22 are included in wing spar 20. In the exemplary embodiment shown in the figures, each structural member 22 has a cross-sectional shape with linear sections connected by partially arcuate corners (i.e., a "C-channel"), or the like. Alternatively, instead of two structural members 22, a single beam with a cross-sectional shape having generally rectangular, parallel base and cap portions separated by a generally perpendicular rectangular support (i.e., an "I beam") with a hollow interior, or the like shaped wing spar 20 may be used. Other structural members and shapes are also possible.

As disclosed herein, the system 10 is configured to manage the heat load generated by the heat load source 24, such as the EAS 25, or the like, mounted to an aircraft structural member (e.g., structural member(s) 22 forming the wing spar 20). As shown in FIG. 1, for embodiments where the heat load source 24 is an EAS 25, the system 10 also includes an electrically operated actuator 26 and a mount 28 that supports the actuator 26 in the desired position on the wing spar 20, or other structural member. Mount 28 is suitably shaped and formed of a suitable, thermally-conductive material to facilitate the transfer of heat away from the actuator 26. For example, if an outer surface of the EAS 25 is generally cylindrical, mount 28 is reciprocally curved so that the EAS 25 and the mount 28 make sufficient contact to efficiently transfer heat away from the EAS 25. Likewise, mount 28 is formed from thermally-conductive materials including: stainless steel, aluminum, metals, non-metals, pyrolytic graphite blocks, carbon foams, pyrolytic graphite strips or straps, copper blocks, strips, or straps, temperature sensitive hydro gels, phase change materials, thermally-conductive epoxy, thermally-conductive polymers, thermally-conductive pastes, or other thermally-conductive material. The particular material for mount 28 is selected based on, among other things, the desired strength, durability, and thermal conductivity for the mount 28.

System 10 also includes one or more first fasteners 30. The fasteners 30 are configured to further enhance the thermal path from the heat load 24 (e.g., an EAS 25) to the heat transfer member 12. More specifically, as shown, the first fasteners 30 extend through at least two composite components (e.g., through two structural members 22, or through a structural member 22 and the wing skin 18) and through the heat transfer member 12 between the composite components. First fasteners 30 are a metal, or other thermally-conductive material, and may vary in number and location. Accordingly, the heat from heat source 24, e.g., an EAS 25 or the like, is transferred along the first fasteners 30 into the heat transfer member 12 instead of through the relatively low thermally-conductive composite components (e.g., structural member 22 and wing skin 18). The first fasteners 30 also stiffen a vertical section of the structural member(s) 22 to prevent deformation of the vertical section of the structural member(s) 22.

The system 10 can further include at least one second fastener 32 formed from a thermally-conductive material. Second fasteners 32 couple the wing skin 18 to the heat transfer member 12 and the structural member(s) 22 (e.g., that form wing spar 20). Second fasteners 32 are also a metal or other thermally-conductive material and also vary in number and location. The second fasteners 32 not only bear a mechanical load, but also transfer heat from the heat transfer member 12 to the heat sink 23, such as the ambient atmosphere 46 (e.g., outside wing skin 18), a wing tank 48, and/or other suitable heat sink 23. The second fasteners 32 also provide a heat path to the carbon fibers of the composite skin 18. The carbon fibers generally have a thermal conductivity of approximately 21-180 W/(m-K) and heat will be conducted along the fibers and spread out to large parts of the skin 18. In this manner, the heat is distributed to an area much larger (e.g., hundreds or thousands times larger) than the area of second fastener 32 heads, which facilitates the heat conduction to the atmosphere 46, or other surrounding environment, in that the heat has been distributed to large area.

The first fasteners 30 and second fasteners 32 are sized based on the anticipated heat load and the thermal conductivity of the composite material (e.g., wing skin 18, wing spar 20, or other structural members). In addition, the first fasteners 30 and second fasteners 32 also serve a structural, load-bearing function and are sized according to the load to be borne. Overall, to manage the heat produced by an EAS 25, or other heat generating device, coupled to the composite assembly, the thermal path is generally from the actuator 26, along an actuator mount 28, into the first fasteners 30, then into the heat transfer member 12 (and/or a wing tank), from the heat transfer member 12 into second fasteners 32 (and/or the composite wing skin 18), and ultimately to the heat sink 23 (e.g., the ambient atmosphere 46 on the other side of the wing skin 18). In FIGS. 1-3, the fasteners 30, 32, are illustrated schematically and include any suitable fastener for the chosen application. For example, fasteners 30, 32 include: through-bolts with accompanying nuts (not shown), rivets, flush-mount bolts (e.g., for wing skin 18 fastening), or the like.

For embodiments using a heat transfer member 12 comprising a carbon foam, which typically does not have particularly high mechanical strength, to strengthen the structural assembly (e.g., wing spar 20), stiffening members 34, or the like, are positioned between the composite wing skin 18 and the structural member 22 (e.g., that form wing spar 20).

FIG. 2 is a side-view, cross-sectional schematic along 2-2 of FIG. 1 that illustrates an embodiment including stiffening members 34. Channels 36 are defined between stiffening members 34, and the heat transfer member 12 extends through the channels 36. As shown, the second fasteners 32 are coupled through the heat transfer member 12, not through stiffening members 34, in order to, among other things, facilitate the heat transfer. Embodiments of stiffening members 34 include CFRP material, thermally-conductive metals, or combinations of the foregoing that add desired structural strength without adding undesired weight to the aircraft. As shown in FIG. 2, wing spar 20 includes a web 222, a cap 224, and a base 226. The web portion 222, cap 224, and base 226 are formed by structural member(s) 22, as described above. Stiffening members 34 are placed between cap 224 and wing skin 18 on the top side, and base 226 and wing skin 18 on the bottom side. In FIG. 2, only a few representative first fasteners 30 and only a few representative second fasteners 32 are shown for illustrative purposes. In practice, there may be more than one row and/or column of first fasteners 30 in the web portion 222, and there would be more than one second fastener 32 in the bottom wing skin 18b.

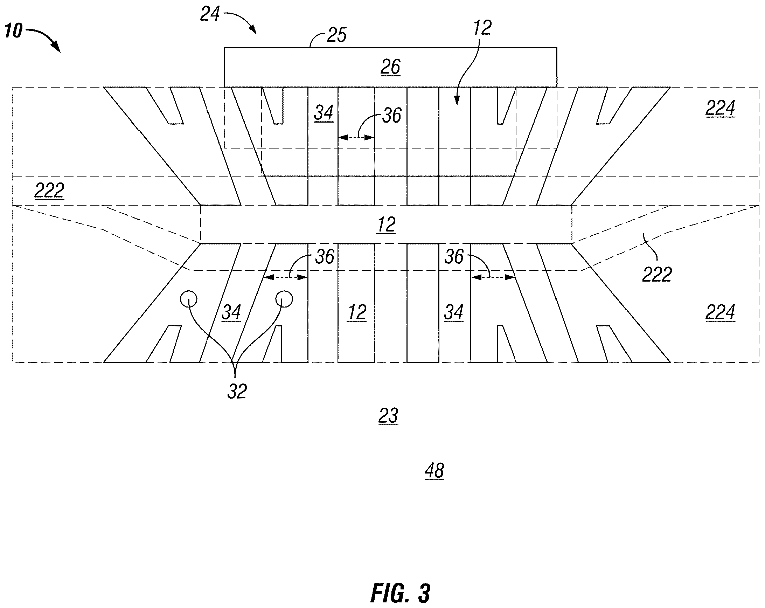

FIG. 3 is a top-view, cross-sectional schematic along 3-3 of FIG. 1 with the top wing skin 18 removed for clarity. As shown in this view, channels 36 vary in size, shape, width, and length as is desired. Heat transfer member 12 fills the various channels 36 as disclosed herein. Stiffening members 34 are also sized and distributed as disclosed herein to add structural strength to the thermal management system 10. Again, in FIG. 3, first fasteners 30 are not illustrated for clarity, and a few exemplary second fasteners 32 are shown providing a heat path from heat transfer member 12 to outer wing skin (not shown in FIG. 3).

## Claims

1. A thermal management system (10) for transferring heat from a heat load, the thermal management system (10) comprising:
at least one composite structural member (22) that supports a heat load source (24) that generates the heat load;
a heat transfer member (12) in thermal contact with the at least one composite structural member (22) and in thermal contact with a heat sink (23); and
a thermally conductive first fastener (30), in thermal contact with the heat transfer member (12), that couples the heat load source (24) to the at least one composite structural member (22) and conducts heat from the heat load source (24) into the heat transfer member (12),
wherein the heat transfer member (12) conducts heat from the thermally conductive first fastener (30) to the heat sink (23),
wherein the heat sink (23) comprises ambient atmosphere (46) and wherein the thermal management system (10) further comprises:
a composite wing skin (18); and
a thermally conductive second fastener (32), in thermal contact with the heat transfer member (12), and coupling the composite wing skin (18) to the at least one composite structural member (22);
wherein the composite wing skin (18) has at least one side exposed to the ambient atmosphere (46), and at least a portion of the thermally conductive second fastener (32) extends to the at least one side, exposed to the ambient atmosphere (46).

2. The thermal management system (10) of claim 1 wherein the heat transfer member (12) further comprises carbon foam material.

3. The thermal management system (10) of any one of claims 1 to 2 wherein the at least one composite structural member (22) has a first thermal conductivity coefficient, the heat transfer member (12) has a second thermal conductivity coefficient that is higher than the first thermal conductivity coefficient, and the thermally-conductive first fastener (30) has a third thermal conductivity coefficient that is higher than the second thermal conductivity coefficient.

4. The thermal management system (10) of any one of claims 1 to 3 wherein the heat load source (24) further comprises an electric actuation system (EAS) (25).

5. The thermal management system (10) of any one of claims 1 to 4 wherein the composite wing skin (18) further comprises fibers in a resin, and the fibers are more thermally conductive than the resin,
wherein, preferably, the fibers comprise glass or carbon.

6. A composite aircraft wing (40) comprising the thermal management system (10) of any of claims 1 to 5.

7. The composite aircraft wing of claim 6, wherein the at least one composite structural member (22) is included in a composite wing spar (20) having an interior cavity that contains a portion of the heat transfer member (12), and the heat load source (24) is an electric actuation system (EAS) (25), coupled to the composite wing spar (20) by a thermally-conductive mount (28) and the thermally conductive first fastener (30), the thermally conductive first fastener (30) extending into the interior cavity and being in thermal contact with the heat transfer member (12), wherein the composite wing skin (1) comprises:
a first composite wing skin (18a) in thermal contact on an interior side of the first composite wing skin (18a) with the heat transfer member (12) and exposed to ambient atmosphere (46) on an exterior side of the first composite wing skin (18a);
a second composite wing skin (18b) in thermal contact on an interior side of the second composite wing skin (18b) with the heat transfer member (12) and exposed to the ambient atmosphere (46) on an exterior side of the second composite wing skin (18b); and
wherein the composite aircraft wing further comprises:
one or more thermally conductive second fasteners (32) that couple the first composite wing skin (18a) and the second composite wing skin (18b) to the composite wing spar (20) and that thermally contact the heat transfer member (12);
wherein a portion of each of the one or more thermally-conductive second fasteners (32) extends through to the exterior side of the first composite wing skin (18a) or the second composite wing skin (18b).

8. The composite aircraft wing (40) of claim 7 further comprising at least one stiffening member in contact with the composite wing spar (20) and the interior side of the first composite wing skin (18a) or the second composite wing skin (18b).

9. The composite aircraft wing (40) of claim 8 wherein the at least one stiffening member is configured to define one or more channels (36), preferably wherein the one or more channels (36) contain a portion of the heat transfer member (12).

10. The composite aircraft wing (40) of any one of claims 7 to 9 further comprising an electrically operated actuator (26), wherein the thermally conductive mount (28) supports the electrically operated actuator (26) in a desired position on the composite wing spar (20), and wherein the thermally conductive mount (28) is configured to transfer heat away from the electrically operated actuator (26).

11. The composite aircraft wing (40) of any of one of claims 7 to 8 wherein the thermally conductive first fastener (30) or the one or more thermally conductive second fastener(s) (32) further comprise(s) stainless steel.

## Patentansprüche

1. Wärme-Managementsystem (10) zum Übertragen von Wärme von einer Wärmelast, wobei das Wärme-Managementsystem (10) aufweist:
wenigstens ein Verbund-Strukturelement (22), das eine Wärmelastquelle (24) trägt, die die Wärmelast erzeugt;
ein Wärmetransferelement (12), das sich in Wärmekontakt befindet mit dem wenigstens einen Verbund-Strukturelement (22) und das sich in Wärmekontakt befindet mit einer Wärmesenke (23); und
einen wärmeleitfähigen ersten Befestiger (30), der sich in Wärmekontakt befindet mit dem Wärmetransferelement (12), der die Wärmelastquelle (24) mit dem wenigstens einen Verbund-Strukturelement (22) koppelt und der Wärme von der Wärmelastquelle (24) in das Wärmetransferelement (12) leitet,
wobei das Wärmetransferelement (12) Wärme von dem wärmeleitfähigen ersten Befestiger (30) zu der Wärmesenke (23) leitet,
wobei die Wärmesenke (23) Umgebungsatmosphäre (46) beinhaltet und wobei das Wärme-Managementsystem (10) ferner aufweist:
eine Verbund-Tragflächenhaut (18); und
einen wärmeleitfähigen zweiten Befestiger (32), der sich in Wärmekontakt befindet mit dem Wärmetransferelement (12) und der die Verbund-Tragflächenhaut (18) mit dem wenigstens einen Verbund-Strukturelement (22) koppelt;
wobei die Verbund-Tragflächenhaut (18) wenigstens eine Seite aufweist, die der Umgebungsatmosphäre (46) ausgesetzt ist, und wobei wenigstens ein Abschnitt des wärmeleitfähigen zweiten Befestigers (32) sich hin zu der wenigstens einen Seite erstreckt, die der Umgebungsatmosphäre (46) ausgesetzt ist.

2. Wärme-Managementsystem (10) nach Anspruch 1, wobei das Wärmetransferelement (12) ein Kohlenstoffschaummaterial beinhaltet.

3. Wärme-Managementsystem (10) nach einem beliebigen der Ansprüche 1 bis 2, wobei das wenigstens eine Verbund-Strukturelement (22) einen ersten Wärmeleitfähigkeitskoeffizienten hat, wobei das Wärmetransferelement (12) einen zweiten Wärmeleitfähigkeitskoeffizienten hat, der höher ist als der erste Wärmeleitfähigkeitskoeffizient, und wobei der wärmeleitfähige erste Befestiger (30) einen dritten Wärmeleitfähigkeitskoeffizienten hat, der höher ist als der zweite Wärmeleitfähigkeitskoeffizient.

4. Wärme-Managementsystem (10) nach einem beliebigen der Ansprüche 1 bis 3, wobei die Wärmelastquelle (24) ein elektrisches Betätigungssystem ("electric actuation system", EAS) (25) aufweist.

5. Wärme-Managementsystem (10) nach einem beliebigen der Ansprüche 1 bis 4, wobei die Verbund-Tragflächenhaut (18) Fasern in einem Harz beinhaltet und wobei die Fasern thermisch leitfähiger sind als das Harz,
wobei die Fasern vorzugsweise Glas oder Kohlenstoff aufweisen.

6. Verbund-Luftfahrzeugtragfläche (40), die das Wärme-Managementsystem (10) nach einem beliebigen der Ansprüche 1 bis 5 aufweist.

7. Verbund-Luftfahrzeugtragfläche nach Anspruch 6, wobei das wenigstens eine Verbund-Strukturelement (22) in einem Verbund-Tragflächenholm (20) enthalten ist, der einen inneren Hohlraum aufweist, der einen Abschnitt des Wärmetransferelementes (12) aufnimmt, und wobei die Wärmelastquelle (24) ein elektrisches Betätigungssystem ("electric actuation system", EAS) (25) ist, das mit dem Verbund-Tragflächenholm (20) durch eine wärmeleitfähige Halterung (28) und den wärmeleitfähigen ersten Befestiger (30) gekoppelt ist, wobei der wärmeleitfähige erste Befestiger (30) sich in den inneren Hohlraum erstreckt und sich in Wärmekontakt befindet mit dem Wärmetransferelement (12), wobei die Verbund-Tragflächenhaut (1) aufweist:
eine erste Verbund-Tragflächenhaut (18a), die sich in Wärmekontakt befindet mit dem Wärmetransferelement (12), und zwar auf einer inneren Seite der ersten Verbund-Tragflächenhaut (18a), und die auf einer äußeren Seite der ersten Verbund-Tragflächenhaut (18a) einer Umgebungsatmosphäre (46) ausgesetzt ist;
eine zweite Verbund-Tragflächenhaut (18b), die sich in Wärmkontakt befindet mit dem Wärmetransferelement (12), und zwar auf einer inneren Seite der zweiten Verbund-Tragflächenhaut (18b), und die auf einer äußeren Seite der zweiten Verbund-Tragflächenhaut (18b) der Umgebungsatmosphäre (46) ausgesetzt ist; und
wobei die Verbund-Luftfahrzeugtragfläche ferner aufweist:
einen oder mehrere wärmeleitfähige zweite Befestiger (32), der bzw. die die erste Verbund-Tragflächenhaut (18a) und die zweite Verbund-Tragflächenhaut (18b) mit dem Verbund-Tragflächenholm (20) koppelt bzw. koppeln und der bzw. die das Wärmetransferelement (12) wärme-kontaktiert bzw. wärme-kontaktieren;
wobei ein Abschnitt von jedem des einen oder der mehreren wärmeleitfähigen zweiten Befestiger(s) (32) sich hin zu der äußeren Seite durch die erste Verbund-Tragflächenhaut (18a) oder die zweite Verbund-Tragflächenhaut (18b) hindurch erstreckt.

8. Verbund-Luftfahrzeugtragfläche (40) nach Anspruch 7, ferner mit wenigstens einem Versteifungselement in Kontakt mit dem Verbund-Tragflächenholm (20) und der inneren Seite der ersten Verbund-Tragflächenhaut (18a) oder der zweiten Verbund-Tragflächenhaut (18b).

9. Verbund-Luftfahrzeugtragfläche (40) nach Anspruch 8, wobei das wenigstens eine Versteifungselement dazu konfiguriert ist, einen oder mehrere Kanäle (36) zu definieren, wobei der eine oder die mehreren Kanäle (36) vorzugsweise einen Abschnitt des Wärmetransferelementes (12) enthält bzw. enthalten.

10. Verbund-Luftfahrzeugtragfläche (40) nach einem beliebigen der Ansprüche 7 bis 9, ferner mit einem elektrisch betätigten Aktuator (26), wobei die wärmeleitfähige Halterung (28) den elektrisch betätigten Aktuator (26) in einer gewünschten Position an dem Verbund-Tragflächenholm (20) trägt, und wobei die wärmeleitfähige Halterung (28) dazu konfiguriert ist, Wärme weg von dem elektrisch betätigten Aktuator (26) zu übertragen.

11. Verbund-Luftfahrzeugtragfläche (40) nach einem beliebigen der Ansprüche 7 bis 8, wobei der wärmeleitfähige erste Befestiger (30) oder der eine oder die mehreren wärmeleitfähigen zweiten Befestiger (32) rostfreien Stahl beinhaltet bzw. beinhalten.

## Revendications

1. Système (10) de gestion thermique destiné à transférer de la chaleur à partir d'une charge thermique, le système (10) de gestion thermique comportant :
au moins un élément structural composite (22) qui soutient une source (24) de charge thermique qui génère la charge thermique ;
un élément (12) de transfert de chaleur en contact thermique avec l'élément ou les éléments structuraux composites (22) et en contact thermique avec une source froide (23) ; et
un premier organe (30) de fixation thermiquement conducteur, en contact thermique avec l'élément (12) de transfert de chaleur, qui couple la source (24) de charge thermique à l'élément ou aux éléments structuraux composites (22) et conduit la chaleur de la source (24) de charge thermique jusque dans l'élément (12) de transfert de chaleur,
l'élément (12) de transfert de chaleur conduisant la chaleur du premier organe (30) de fixation thermiquement conducteur à la source froide (23),
la source froide (23) comportant une atmosphère ambiante (46) et le système (10) de gestion thermique comportant en outre :
un revêtement (18) d'aile composite ; et
un deuxième organe (32) de fixation thermiquement conducteur, en contact thermique avec l'élément (12) de transfert de chaleur, et couplant le revêtement (18) d'aile composite à l'élément ou aux éléments structuraux composites (22) ;
le revêtement (18) d'aile composite présentant au moins un côté exposé à l'atmosphère ambiante (46), et au moins une partie du deuxième organe (32) de fixation thermiquement conducteur s'étendant jusqu'au(x) côté(s) exposé(s) à l'atmosphère ambiante (46).

2. Système (10) de gestion thermique selon la revendication 1, l'élément (12) de transfert de chaleur comportant en outre un matériau en mousse de carbone.

3. Système (10) de gestion thermique selon l'une quelconque des revendications 1 à 2, l'élément ou les éléments structuraux composites (22) présentant un premier coefficient de conductivité thermique, l'élément (12) de transfert de chaleur présentant un deuxième coefficient de conductivité thermique qui est supérieur au premier coefficient de conductivité thermique, et le premier organe (30) de fixation thermiquement conducteur présentant un troisième coefficient de conductivité thermique qui est supérieur au deuxième coefficient de conductivité thermique.

4. Système (10) de gestion thermique selon l'une quelconque des revendications 1 à 3, la source (24) de charge thermique comportant en outre un système d'actionnement électrique (EAS) (25).

5. Système (10) de gestion thermique selon l'une quelconque des revendications 1 à 4, le revêtement (18) d'aile composite comportant en outre des fibres dans une résine, et les fibres étant plus thermiquement conductrices que la résine,
les fibres comportant de préférence du verre ou du carbone.

6. Aile (40) d'avion composite comportant le système (10) de gestion thermique selon l'une quelconque des revendications 1 à 5.

7. Aile d'avion composite selon la revendication 6, l'élément ou les éléments structuraux composites (22) étant compris dans un longeron (20) d'aile composite doté d'une cavité intérieure qui contient une partie de l'élément (12) de transfert de chaleur, et la source (24) de charge thermique étant un système d'actionnement électrique (EAS) (25), couplé au longeron (20) d'aile composite par un support thermiquement conducteur (28) et le premier organe (30) de fixation thermiquement conducteur, le premier organe (30) de fixation thermiquement conducteur s'étendant jusque dans la cavité intérieure et étant en contact thermique avec l'élément (12) de transfert de chaleur, le revêtement (1) d'aile composite comportant :
un premier revêtement (18a) d'aile composite en contact thermique sur un côté intérieur du premier revêtement (18a) d'aile composite avec l'élément (12) de transfert de chaleur et exposé à l'atmosphère ambiante (46) sur un côté extérieur du premier revêtement (18a) d'aile composite ;
un deuxième revêtement (18b) d'aile composite en contact thermique sur un côté intérieur du deuxième revêtement (18b) d'aile composite avec l'élément (12) de transfert de chaleur et exposé à l'atmosphère ambiante (46) sur un côté extérieur du deuxième revêtement (18b) d'aile composite ; et
l'aile d'avion composite comportant en outre :
un ou plusieurs deuxièmes organes (32) de fixation thermiquement conducteurs qui couplent le premier revêtement (18a) d'aile composite et le deuxième revêtement (18b) d'aile composite au longeron (20) d'aile composite et qui sont thermiquement en contact avec l'élément (12) de transfert de chaleur ;
une partie du ou de chacun des deuxièmes organes (32) de fixation thermiquement conducteurs s'étendant en pénétrant jusqu'au côté extérieur du premier revêtement (18a) d'aile composite ou du deuxième revêtement (18b) d'aile composite.

8. Aile (40) d'avion composite selon la revendication 7, comportant en outre au moins un élément raidisseur en contact avec le longeron (20) d'aile composite et le côté intérieur du premier revêtement (18a) d'aile composite ou du deuxième revêtement (18b) d'aile composite.

9. Aile (40) d'avion composite selon la revendication 8, l'élément ou les éléments raidisseurs étant configurés pour définir un ou plusieurs canaux (36), le canal ou les canaux (36) contenant de préférence une partie de l'élément (12) de transfert de chaleur.

10. Aile (40) d'avion composite selon l'une quelconque des revendications 7 à 9, comportant en outre un actionneur (26) manoeuvré électriquement, le support thermiquement conducteur (28) soutenant l'actionneur (26) manœuvré électriquement dans une position souhaitée sur le longeron (20) d'aile composite, et le support thermiquement conducteur (28) étant configuré pour transférer de la chaleur à l'écart de l'actionneur (26) manœuvré électriquement.

11. Aile (40) d'avion composite selon l'une quelconque des revendications 7 à 8, le premier organe (30) de fixation thermiquement conducteur, ou le ou les deuxièmes organes de fixation thermiquement conducteurs (32) comportant en outre de l'acier inoxydable.
